(19)

Europäisches
Patentamt
European
Patent Office
Office européen
des brevets

(11) **EP 4 495 832 A1**

(12) **EUROPEAN PATENT APPLICATION**
published in accordance with Art. 153(4) EPC

(43) Date of publication:
**22.01.2025 Bulletin 2025/04**

(21) Application number: **23733192.1**

(22) Date of filing: **10.03.2023**

(51) International Patent Classification (IPC):
*G06N 3/063* (2023.01)     *G06F 11/14* (2006.01)
*G06F 16/172* (2019.01)     *G06F 16/13* (2019.01)

(52) Cooperative Patent Classification (CPC):
**G06N 3/045; G06F 11/14; G06F 16/13;**
**G06F 16/172; G06N 3/063**

(86) International application number:
**PCT/CN2023/080669**

(87) International publication number:
**WO 2023/174163 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2022 CN 202210249465**

(71) Applicants:
• **Zhejiang Lab**
 **Hangzhou City, Zheijiang Province 311121 (CN)**
• **Zhejiang University**
 **Hangzhou, Zhejiang 310058 (CN)**

(72) Inventors:
• **KANG, Min**
 **Hangzhou**
 **Zhejiang 311121 (CN)**

• **LV, Pan**
 **Hangzhou**
 **Zhejiang 310058 (CN)**
• **WANG, Fengjuan**
 **Hangzhou**
 **Zhejiang 311121 (CN)**
• **DENG, Shuiguang**
 **Hangzhou**
 **Zhejiang 310058 (CN)**
• **LI, Ying**
 **Hangzhou**
 **Zhejiang 310058 (CN)**
• **PAN, Gang**
 **Hangzhou**
 **Zhejiang 310058 (CN)**

(74) Representative: **Petraz, Gilberto Luigi et al**
**GLP S.r.l.**
**Viale Europa Unita, 171**
**33100 Udine (IT)**

(54) **NEURAL MODEL STORAGE SYSTEM FOR BRAIN-INSPIRED COMPUTER OPERATING
SYSTEM, AND METHOD**

(57)     A neural model storage system and method for an operating system of a brain-inspired computer are provided. The method includes: storing a neural model on three computing nodes, selecting the computing nodes by dynamically calculating a weight according to the number of idle cores of the first computing node, the number of failures of the first computing node, and failure time of the first computing node in each failure thereof, reading the neural model in the same computing node or cross-computing node, recovering from failures of non-master nodes, recovering from failures of the master node, and recovering from a whole machine restart or failure.

FIG. 1

EP 4 495 832 A1

**Description**

**CROSS-REFERENCE TO RELATED APPLICATIONS**

This application claims priority to Chinese patent application No. 202210249465.5, filed on March 15, 2022, titled "NEURAL MODEL STORAGE SYSTEM AND METHOD FOR OPERATING SYSTEM OF BRAIN-INSPIRED COMPUTER", which is hereby incorporated by reference.

**TECHNICAL FIELD**

The present invention relates to the field of an operating system of a brain-inspired computer, and in particular, to a neural model storage system and method for an operating system of a brain-inspired computer.

**BACKGROUND**

A conventional computer with Von Neumann Architecture has become increasingly mature. With development of a semiconductor industry, a process of a semiconductor integrated circuit has developed from a past level of 1 micron to a current level of 5 nanometers, which approaches a physical limit. In the related art, Moore's Law has been predicted to fail, and the conventional computer architecture is difficult to continue to keep rapid growth in terms of performance, power consumption and the like.

In such a context, a brain-inspired computer and operating system thereof have drawn more and more attention in academia and industry. The brain-inspired computer is a distributed system constructed by horizontally expanding multiple brain-inspired computing nodes. The brain-inspired computer is able to implement parallel computing by simulating a connection of brain neural networks, and has ability to run ultra-large-scale spiking neural networks. Each of the computing nodes includes a plurality of brain-inspired computing chips and a storage medium having a certain capacity. The operating system of the brain-inspired computer uniformly manages computing resources and storage resources.

For the brain-inspired computer, a neural network model is uploaded in a form of a file. The operating system performs centralized management on the model file, and the neural network model can be deployed to the brain-inspired computing chips by a communication protocol. Due to an interconnection of a large number of the computing nodes, the operating system needs to manage large-scale storage resources. Furthermore, the brain-inspired computer needs to support simultaneous operation of a plurality of large-scale neural network models, and at least one model file corresponding to each neural network model needs to be stored in the brain-inspired computer. The large-scale brain-inspired computing nodes and a large number of neural network models bring great challenges to the storage of the neural network models on the brain-inspired computer.

In a distributed file system in the related art, files can be distributed and stored in a plurality of servers. Each server can store and read all files in the distributed file system, and improve performance of file reading/writing via a Log-structured merge-tree (LSM-Tree) data structure, a key-value database, and a cache, but it requires more CPU and memory resources.

Therefore, the distributed file system in the related art is mainly for storage of files on a plurality of servers. Each of the servers generally has sufficient CPUs, memories, and storage resources, and has a few server nodes. However, the brain-inspired computer has characteristics of large scale of server node, limited storage and memory resources in a single server node, and the distributed file system in the related art cannot meet storage needs of the plurality of neural network model. Therefore, it is necessary to provide a special neural model storage method for the operating system of the brain-inspired computer.

**SUMMARY**

According to various embodiments of the present invention, the present invention provides a neural model storage system for an operating system of a brain-inspired computer. The neural model storage system includes a master node, a backup master node, and computing nodes.

The master node is configured for maintaining resources of an entire brain-inspired computer, which include a relationship between a neural model and the computing nodes, and information of the computing nodes, selecting the computing nodes by constructing weights, taking into account the number of idle cores of the computing nodes, the number of failures of the computing nodes, and failure time in each failure thereof, and being subject to a constraint of available storage space of the computing nodes.

The backup master node is configured for redundant backup of the master mode.

The computing nodes include a set of brain-inspired chips configured for deploying the neural model. The brain-inspired chips include a set of cores as a basic unit of computing resource management, which is configured for keeping the neural model stored in a form of a model file and performing computing tasks. The master node is further configured for maintaining the number of remaining cores of the computing nodes.

In some embodiments, the brain-inspired chips include a two-dimensional grid structure, and each grid represents one of the cores. Based on a two-dimensional distribution of brain-inspired chip resources, the operating system of the brain-inspired computer is configured to take the cores as the basic unit of the resource management and abstract a unified address space from brain-inspired computing hardware resources. That is, in the brain-inspired computer, a large two-dimensional grid can be abstracted from all cores of the brain-inspired chips in the computing nodes.

The present invention provides a storage method based on the neural model storage system for the operating system of the brain-inspired computer, and a storage of the neural model include the following steps:

at step 1, the master node selecting the computing nodes to store the neural model, by constructing weights, taking into account the number of idle cores of the computing nodes, the number of failures of the computing nodes, and failure time in each failure thereof, and being subject to the constraint of available storage space of the computing nodes;

at step 2, the master node sending the neural model to the selected computing nodes, maintaining the relationship between the neural model and the computing nodes;

at step 3, the master node making a backup of the relationship between the neural model and the computing nodes to the backup master node; and

at step 4, the master node and the selected computing nodes completing deploying the neural model.

In some embodiments, at step 1, the more the number of idle cores of the computing nodes, the easier the computing nodes to be selected in preference. The less the number of failures of the computing nodes, the easier the computing nodes to be selected in preference. The greater a time difference between a recent failure time of the computing nodes and a previous failure time of the computing nodes, the easier the computing nodes to be selected in preference. The master node maintains remaining storage space of the computing nodes, and computing nodes with remaining storage space less than required storage space of the model file are not selected for storing the model file.

At step 2, the master node sending the model file to the computing nodes which are configured to store the model file via a communication protocol, the computing nodes receiving the model file and feeding back to the master node, the master node recording a correspondence between the model file and the computing nodes which are configured to store the model file via feedback, formulating and maintaining a neural model index table. The neural model index table includes model file information, and the model file information includes a file name, a unique file ID, a file size, a file check code, and computing nodes that store the model file. Other information of the model file can be found based on the file name and/or the file ID. A data structure of the neural model index table is determined by the number of computing nodes of the brain-inspired computer and the number of neural models.

At step 3, the master node synchronizing the neural model index table to the backup master node. The neural model index table can be stored in one copy in the master node and the backup master node, respectively, and not in other nodes.

At step 4, the master node storing the model file to the computing nodes for model deployment, reading the model file from the computing nodes that store the model file, obtaining specific content of the neural model, and sending the specific content to the brain-inspired chips of the computing nodes to configure the cores of the brain-inspired chips.

In some embodiments, the step 1 further includes the following steps:

at step 1.1, searching a first computing node;

at step 1.2, obtaining remaining storage space of the first computing node, when the remaining storage space of the first computing node meets a storage requirement of the model file, obtaining the number of idle cores of the first computing node, the number of failures of the first computing node, and failure time of the first computing node in each failure thereof, calculating a weight according to the number of idle cores of the first computing node, the number of failures of the first computing node, and failure time of the first computing node in each failure thereof; when the remaining storage space of the first computing node does not meet the storage requirement of the model file, performing step 1.3;

at step 1.3, determining whether a next computing node exists, if yes, searching the next computing node and performing the step 1.2 with the next computing node; if no, sending the model file to three computing nodes with the greatest weight.

In some embodiments, the step 1.2 further includes the master node calculating the weight of any computing node, remaining storage space of which meets the storage requirement, according to the following formula:

$$nodeWeight = K_c \times chipResNum - \sum_{i=1}^{n} \frac{K_s}{t_{now} - t_i}$$

*nodeWeight* represents the weight of the computing node, $K_c$ represents an influence parameter of the number of remaining brain-inspired chip resources, *chipResNum* represents the number of remaining brain-inspired chip resources, *i* represents an ith failure of the computing node, *n* represents the total number of failures of the computing node, $t_{now}$ represents the current time, $t_i$ represents the time of the ith failure of the computing node, $K_s$ represents an influence parameter of the number of failures of the computing node, both $K_c$ and $K_s$ are adjustment parameters, and the three computing nodes with the greatest weight are configured to store the model file.

In some embodiments, at step 4, reading the neural model includes: after deploying the neural model to the computing nodes that store the model file, the computing nodes directly reading the model file thereof for deployment, when the model file is read, checking the model file, when it happens that either or both of the model file being not read and the check failing, sending a message to the master node, searching other computing nodes that store the model file, sending a message to the same ones, and reading the neural model. The either or both of the model file being not read and the check failing includes file corruption, node failure, the present computing node replaced by a new computing node, the model file migrated to another computing node, etc. In such a case, it occurs that the model file stored in a present node cannot be obtained, the check of the model file fails, etc.

In some embodiments, the method further includes recovering from failures of non-master nodes. The neural model storage system includes a set of hot backup computing nodes, and the recovering from failures of non-master nodes further includes: when a computing node fails, activating a new computing node, replacing a coordinate of abstracted resource where an original failed computing node is located, and taking over an operation of the failed computing node, the new computing node being in communication with the master node via a communication protocol; searching a relationship between the neural model and the computing nodes, i.e., the neural model index table, finding the model file required by the failed computing node, obtaining the model file from the computing nodes that store the model file, and storing contents of the neural model in a memory of the new computing node, sending the neural model to the brain-inspired chips of the new computing node for configuring.

In some embodiments, the method further includes recovering from failures of the master node: storing the relationship between the neural model and the computing nodes, i.e., the neural model index table, to both the master node and the backup master node, which serve as a backup for each other; when the master node fails, the backup master node becoming a new master node, and taking over an operation of the failed master node; the operating system of the brain-inspired computer electing a new backup master node, and the new master node sending the relationship between the neural model and the computing nodes, i.e., the neural model index table, to the new backup master node.

In some embodiments, the method further includes recovering from a whole machine restart or failure: storing the relationship between the neural model and the computing nodes actually stored by the present computing node, i.e., information such as the neural model index, to a storage device, other than storing the whole neural model index table, when the brain-inspired computer recovers from a whole machine restart or failure, the computing nodes sending the relationship between the neural model and the computing nodes thereof, i.e., the information such as the neural model index, to the master node, and the master node aggregating relationships to formulate a global relationship between the neural model and the computing nodes, i.e., the whole neural model index table.

The details of one or more embodiments of the present invention are set forth in the accompanying drawings and the description below. Other features, objects and advantages of the present invention will become apparent from the description, drawings and claims.

## BRIEF DESCRIPTION OF THE DRAWINGS

To describe and illustrate embodiments and/or examples of the present invention made public here better, reference may be made to one or more of the figures. The additional details or embodiments used to describe the figures should not be construed as limiting the scope of any of the present invention, the embodiments and/or examples currently described, and the best model of the present invention as currently understood.

FIG. 1 is a diagram of a distributed architecture of a neural model storage system for an operating system of a brain-inspired computer in one or more embodiments of the present invention.
FIG. 2 is a flowchart diagram of a storage of a neural model in one or more embodiments of the present invention.
FIG. 3 is a flowchart diagram of selecting computing nodes to store a neural model in one or more embodiments of the present invention.
FIG. 4 is a schematic diagram of storage of all contents of a neural model in one or more embodiments of the present invention.

FIG. 5 is a timing diagram of storage of a neural model in one or more embodiments of the present invention.

**DETAILED DESCRIPTION**

Specific embodiments of the present invention are described in detail below with reference to the accompanying drawings. It should be understood that the specific embodiments described herein are intended only to illustrate and explain the present invention, and are not intended to limit the present invention.

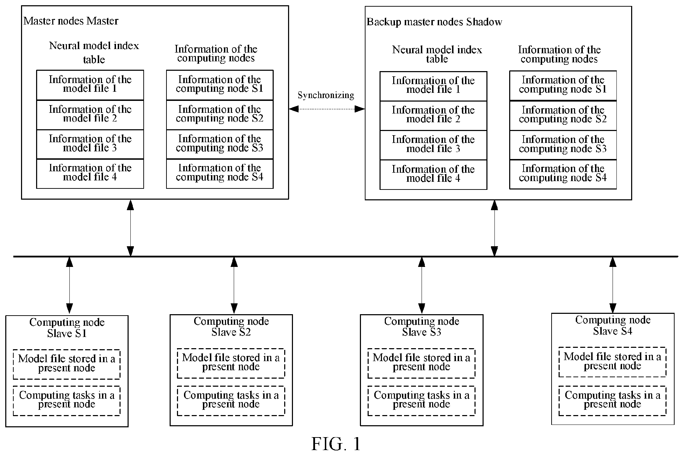

Referring to FIG. 1, the present invention provides a neural model storage system for an operating system of a brain-inspired computer. The neural model storage system includes a master node denoted as Master, a backup master node denoted as Shadow, and computing nodes denoted as Slave. The master node Master is configured for maintaining resources of an entire brain-inspired computer, which include a relationship between a neural model and the computing nodes, and information of the computing nodes, selecting the computing nodes by constructing weights, taking into account the number of idle cores of the computing nodes, the number of failures of the computing nodes, and failure time in each failure thereof, and being subject to a constraint of available storage space of the computing nodes. The backup master node Shadow is configured for redundant backup of the master mode Master. The computing nodes Slave include a set of brain-inspired chips configured for deploying the neural model. Each brain-inspired chip includes a set of cores as a basic unit of computing resource management, which is configured for keeping the neural model stored in a form of a model file and performing computing tasks. The master node is further configured for maintaining the number of remaining cores of the computing nodes.

The present invention further provides a storage method based on the neural model storage system for the operating system of the brain-inspired computer. The storage method based on the neural model storage system for the operating system of the brain-inspired computer includes five parts for classification management, the specific five parts are set forth as follows:

A first part: a storage of the neural model;
A second part: reading the neural model;
A third part: recovering from failures of non-master nodes;
A fourth part: recovering from failures of the master node Master; and
A fifth part: recovering from a whole machine restart or failure.

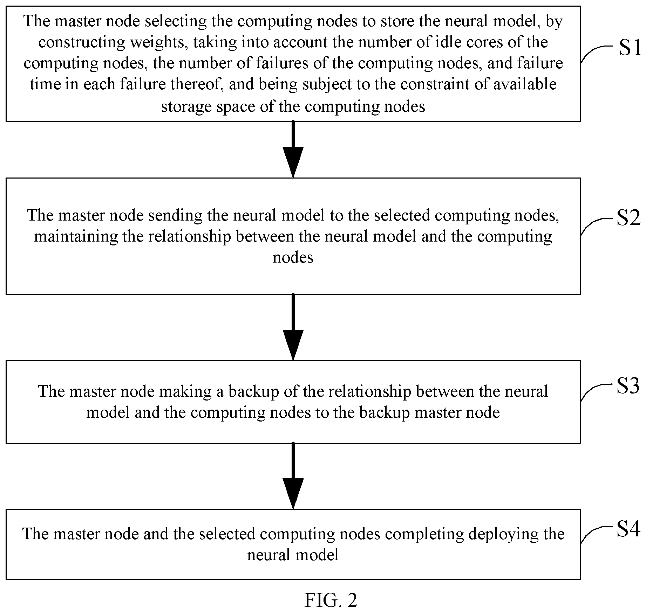

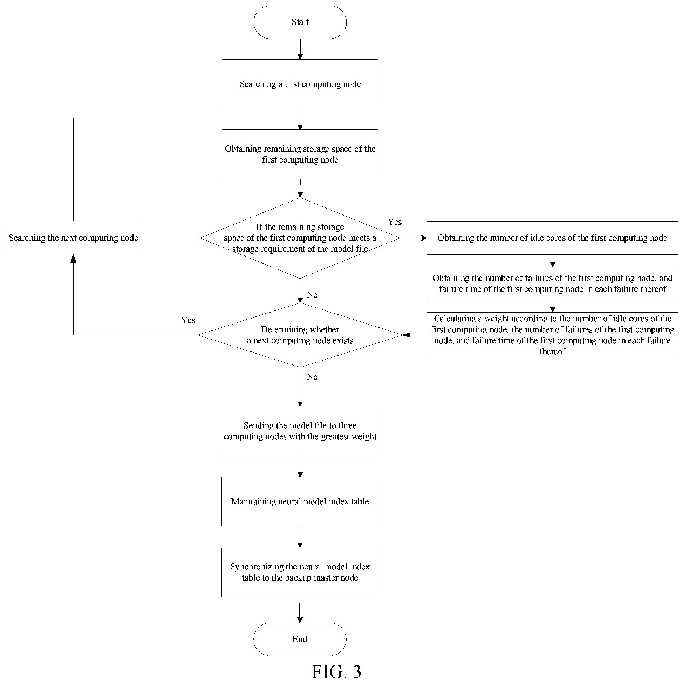

Referring to FIG. 2 and FIG. 3, the storage of the neural model in the first part can specifically include the following step 1 to step 4.

The step 1 can include the master node selecting the computing nodes to store the neural model, by constructing weights, taking into account the number of idle cores of the computing nodes, the number of failures of the computing nodes, and failure time in each failure thereof, and being subject to the constraint of available storage space of the computing nodes.

It should be noted that the weights are selection control parameters of the computing nodes. In some embodiments, by constructing the weights, the selection of each computing node can be referenced and selection probability thereof can be obtained.

In order to reduce the number of interruptions of neural tasks due to failures of the computing nodes, and achieve a goal of improving overall operation efficiency and stability of the operating system of the brain-inspired computer, the more the number of idle cores of the computing nodes, the easier the computing nodes to be selected in preference. Furthermore, the less the number of failures of the computing nodes, the easier the computing nodes to be selected in preference. The greater a time difference between a recent failure time of the computing nodes and a previous failure time of the computing nodes, the easier the computing nodes to be selected in preference. The master node can maintain remaining storage space of the computing nodes, and computing nodes with remaining storage space less than required storage space of the model file are not selected for storing the model file. The step 1 can specifically include the following step 1.1 to step 1.3:

at step 1.1, searching a first computing node;
at step 1.2, obtaining remaining storage space of the first computing node, when the remaining storage space of the first computing node meets a storage requirement of the model file, obtaining the number of idle cores of the first computing node, the number of failures of the first computing node, and failure time of the first computing node in each failure thereof, calculating a weight according to the number of idle cores of the first computing node, the number of failures of the first computing node, and failure time of the first computing node in each failure thereof; when the remaining storage space of the first computing node does not meet the storage requirement of the model file, performing step 1.3;
at step 1.3, determining whether a next computing node exists, if yes, searching the next computing node and performing the step 1.2 with the next computing node; if no, sending the model file to three computing nodes with the greatest weight.

Specifically, the neural model can be stored in a form of a file, hereinafter referred to as a "model file". In order to tolerate a certain failure condition of the computing nodes which are configured to store the model file, the model file can be stored in three computing nodes, thus providing a certain redundant backup function. The master node Master can receive the model file uploaded by a user, select three computing nodes to store the model file via a certain strategy, and maintain the relationship between the neural model and the computing nodes which are configured to store the model file. In order to reduce the number of interruptions of neural tasks due to failures of the computing nodes, and achieve the goal of improving overall operation efficiency and stability of the operating system of the brain-inspired computer, the computing nodes can be selected by taking into account the number of idle cores of the computing nodes, the number of failures of the computing nodes, and failure time in each failure thereof, and being subject to a constraint of available storage space of the computing nodes. Specific strategies are as follows.

Since the neural model needs to be deployed in the brain-inspired chip, each of the computing nodes can manage a fixed number of brain-inspired chips, and each of the brain-inspired chips can include a certain number of cores. The cores can be the basic unit of computing resource management for the operating system of a brain-inspired computer. The master node Master is further configured for maintaining the number of remaining cores of the computing nodes. When selecting a computing node where the model file is stored, the more the number of remaining cores of the computing nodes, the easier the computing nodes to be selected in preference.

The master node Master can maintain the number of failures of each of the computing nodes, and failure time in each failure thereof. The failures of each of the computing nodes can include restarting computing nodes, file reading failures, memory verification errors, communication timeouts, etc. The less the number of failures of the computing nodes, the easier the computing nodes to be selected in preference. In addition, it is necessary to consider the failure time of the computing nodes. The failures of the computing nodes in a recent failure time have a greater impact on the selection of the computing nodes than that in a previous failure time.

The master node Master can further maintain remaining storage space of the computing nodes Salve, and computing nodes with remaining storage space less than required storage space of the model file are not selected for storing the model file.

Based on the above conditions, the master node can calculate the weight of any computing node, remaining storage space of which meets the storage requirement according to the following formula:

$$nodeWeight = K_c \times chipResNum - \sum_{i=1}^{n} \frac{K_s}{t_{now} - t_i}$$

*nodeWeight* represents the weight of the computing node, $K_c$ represents an influence parameter of the number of remaining brain-inspired chip resources, *chipResNum* represents the number of remaining brain-inspired chip resources, *i* represents an ith failure of the computing node, *n* represents the total number of failures of the computing node, $t_{now}$ represents the current time, $t_i$ represents the time of the ith failure of the computing node, $K_s$ represents an influence parameter of the number of failures of the computing node. Both $K_c$ and $K_s$ are adjustment parameters, and need to be appropriately debugged and adjusted according to a scale of the computing nodes of the brain-inspired computer, etc. In order to tolerate a certain failure conditions of the computing nodes which are configured to store the model file, the three computing nodes with the greatest weight can be configured to store the model file. In some embodiments, when the failures of the computing nodes are not considered, a computing node with the greatest weight can be configured to store the model file.

The step 2 can include the master node sending the neural model to the selected computing nodes, maintaining the relationship between the neural model and the computing nodes.

The master node can send the model file to the computing nodes which are configured to store the model file via a communication protocol. The computing nodes can receive the model file and feed back to the master node. The master node can record a correspondence between the model file and the computing nodes which are configured to store the model file via feedback, formulate and maintain a neural model index table.

Specifically, after selecting the computing nodes configured to store the neural model in the step 1, the master node Master can send the model file to the computing nodes which are configured to store the model file via a communication protocol. The computing nodes can reply to the master node after receiving the model file. After receiving all the replies, the master node can record the correspondence between the model file and the computing nodes which are configured to store the model file, formulate the neural model index table.

The neural model index table can include a file name, a unique file ID, a file size, a file check code, and computing nodes that store the model file. Other information of the model file can be found based on the file name and/or the file ID. A data structure of the neural model index table can be determined by the number of computing nodes of the brain-inspired computer and the number of neural models.

The step 3 can include the master node making a backup of the relationship between the neural model and the computing nodes to the backup master node.

The master node can synchronize the neural model index table to the backup master node.

Specifically, the neural model index table can be stored in a copy in the master node Master and the backup master node Shadow, respectively, and not in other nodes. In this way, not only can it avoid overhead caused by the neural model index table when stored in all nodes, but also avoid an entire system being unavailable at a single point of failure when the neural model index table storage stored on a single computing node, thus achieving a balance of reliability and complexity.

The step 4 can include the master node and the selected computing nodes completing deploying the neural model.

Specifically, the step 4 can include the master node storing the model file to the computing nodes for model deployment, reading the model file from the computing nodes that store the model file, obtaining specific content of the neural model, and sending the specific content to the brain-inspired chips of the computing nodes to configure the cores of the brain-inspired chips.

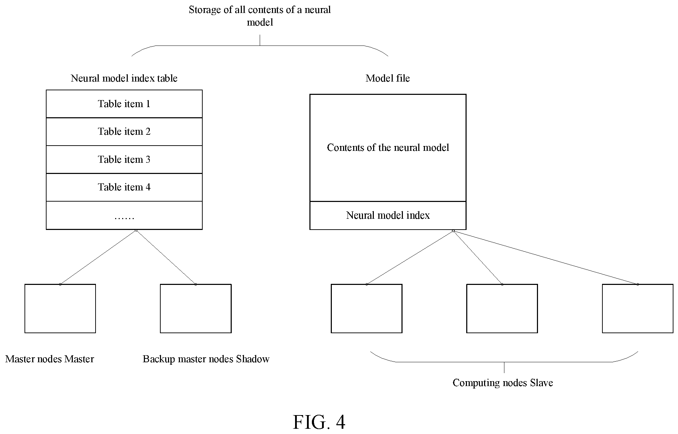

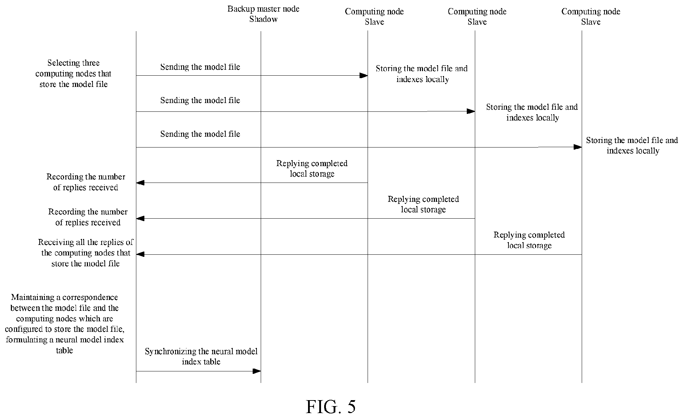

Based on the step 3 and the step 4, storage of all contents of the neural model can be shown in FIG. 4, and a timing diagram of storage of a neural model can be shown in FIG. 5.

With the above steps, it can be achieved that the storage and reading of the neural model in the brain-inspired computer. Furthermore, the computing nodes that store the neural model can be dynamically selected according to the weight thereof, and a cross-node access and redundancy mechanism of the neural model can be provided, thus realizing the reading of the neural model among the computing nodes and self-repair after a system failure.

The following is an example of the storage and deployment of the neural model to describe in detail a complete process of storage of the neural model.

A present neural model storage system can include a master node and a backup master node, as well as six computing nodes donated as S1, S2, S3, S4, S5, and S6. The brain-inspired chip resources and storage space of the six computing nodes are shown in Table 1:

Table 1: Resources and storage space of the computing nodes

| Computing nodes | The number of idle cores | Available storage space | The number of failures | Failure time in each failure |
|---|---|---|---|---|
| S1 | 10000 | 500 MB | 3 | 202103131328 202103131301 202103130028 |
| S2 | 7000 | 300 MB | 0 | |
| S3 | 5000 | 2000 MB | 1 | 202103131223 |
| S4 | 4000 | 1000 MB | 0 | |
| S5 | 2000 | 90 MB | 0 | |
| S6 | 1000 | 500 MB | 0 | |

After receiving a model file uploaded by a user with a size of 100 MB, the master node can find the computing nodes S1, S2, S3, S4, and S6, remaining storage space of which meets the storage requirement according to the size of the model file.

The process of storage of a neural model can include researching the table of resources and storage space of the computing nodes and fault records thereof, and calculating the weight of computing nodes S1, S2, S3, S4, and S6 according to the formula in step 1 above. Adjustment parameters $K_c$ and $K_s$ can be obtained by actual debugging, and can be 0.0012 and 73 in this embodiment, respectively. When current time is 14:00 on March 13, 2021 (i.e.,202103131400), the weight of the five nodes S1, S2, S3, S4, and S6 are calculated to be 8.39, 8.40, 5.24, 4.80, and 1.20, respectively.

According to the above results, three computing nodes with the greatest weight can be S2, S1, and S3. The process of storage of a neural model can further include sending the model file to the three computing nodes according to the above step 2 and step 3, and recording relevant information of the model file and node information of the stored model file in the neural model index table.

Reading the neural model in the second part can include after deploying the neural model to the computing nodes that store the model file, the computing nodes directly reading the model file thereof for deployment, thus avoiding cross-node acquisition of the model file, and avoiding overhead of model file transmission. Reading the neural model in the second part can further include when the model file is read, checking the model file, when it happens that either or both of the model file being not read and the check failing, sending a message to the master node, searching other computing nodes that store the model file, sending a message to the same ones, and reading the neural model.

Specifically, the neural model can be deployed on the computing nodes that store the model file. In this way, the model file on the computing nodes can be directly read for deployment, thus avoiding cross-node acquisition of the model file, and avoiding overhead of model file transmission.

When the model file is read, the model file can be checked. During conditions such as file corruption, node failure, the present computing node replaced by a new computing node, the model file migrated to another computing node, etc., it occurs that the model file stored in a present node cannot be obtained, the check of the model file fails, etc. Reading the neural model in the second part can further include sending a message to the master node, searching other computing nodes that store the model file, sending a message to the same ones, and reading the neural model.

In the recovering from failures of non-master nodes of the third part, the neural model storage system can include a set of hot backup computing nodes. The recovering from failures of non-master nodes can further include when a computing node fails, activating a new computing node, replacing a coordinate of abstracted resource where an original failed computing node is located, and taking over an operation of the failed computing node. The new computing node can be in communication with the master node via a communication protocol. The recovering from failures of non-master nodes can further include searching a relationship between the neural model and the computing nodes, i.e., the neural model index table, finding the model file required by the failed computing node, obtaining the model file from the computing nodes that store the model file, storing contents of the neural model in a memory of the new computing node, and sending the neural model to the brain-inspired chips of the new computing node for configuring. It should be noted that the coordinate of abstracted resource can refer to a spatial address of a corresponding computing node.

Specifically, for the third part, the neural model storage system can include a certain number of hot backup computing nodes. When the computing node fails, and the new computing node is activated, the new computing node can replace the coordinate of abstracted resource where the original failed computing node is located, and take over an operation of the failed computing node. The new computing node can be in communication with the master node Master via the communication protocol, search the neural model index table, find the model file required by the failed computing node, obtain the model file from the computing nodes that store the model file, store contents of the neural model in a memory of the new computing node, and send the neural model to the brain-inspired chips of the new computing node for configuring.

A premise of the above operation is that the brain-inspired computer can include a plurality of computing nodes, and each of the computing nodes can include a plurality of brain-inspired chips. Each of the brain-inspired computing chips can include a two-dimensional grid structure of m*n, and each grid represents one of the cores. Based on a two-dimensional distribution of brain-inspired chip resources, the operating system of the brain-inspired computer can be configured to take the cores as the basic unit of the resource management and abstract a unified address space from brain-inspired computing hardware resources. That is, in the brain-inspired computer, a large two-dimensional grid can be abstracted from all cores of the brain-inspired chips in the computing nodes.

When a single computing node fails, the activated new computing node can continue to operate stably. The new computing node can also synchronize the required model file to itself and store it in a storage device. When a default model file is subsequently read, the model file can be read directly from the computing node itself without obtaining from other computing nodes, thus avoiding the overhead caused by communication among computing nodes. In addition, at least three copies of the model file can be ensured to store in the neural model storage system, which can further improve robustness of the neural model storage system.

In the recovering from failures of the master node Master of the fourth part, the master node can store important data such as the neural model index table, and once the neural model index table fails, the neural model can be unable to be stored and read across nodes, thus leading to the neural tasks not operating normally. The fourth part can include storing the relationship between the neural model and the computing nodes, i.e., the neural model index table, to both the master node and the backup master node, which serve as a backup for each other. When the master node fails, the backup master node can become a new master node, and take over an operation of the failed master node, so as to ensure that a storage function of the neural model continues to be available. In order to avoid the failure of the new master node, the operating system of the brain-inspired computer can elect a new backup master node, and the new master node can send the relationship between the neural model and the computing nodes, i.e., the neural model index table, to the new backup master node, so as to ensure that the neural model storage system can continue to operate after a plurality failures of the computing nodes.

In the recovering from a whole machine restart or failure of the fifth part, since the master node and backup master node store important information such as the neural model index table, when it happens that the whole machine is powered off, the whole machine abnormally reboots, etc., the neural model index table on the master node and the backup master node cannot be available, and the neural model index table need be restored. The fifth part can include storing the relationship between the neural model and the computing nodes actually stored by the present computing node, i.e., information such as the neural model index, to a storage device, other than storing the whole neural model index table. When the brain-inspired computer recovers from a whole machine restart or failure, the computing nodes can send the relationship between the neural model and the computing nodes thereof, i.e., the information such as the neural model index, to the master node, and the master node can aggregate relationships to formulate a global relationship between the neural model and the computing nodes, i.e., the whole neural model index table. Compared with the master node storing the neural model index table both in a random access memory (RAM) and a storage device, the neural model storage method provided in the present embodiments can avoid repeated changes on the neural model index table when the model file is frequently added and deleted, thus avoiding repeated reading and writing of the storage device to reduce life of the storage device. Compared with saving the neural model index table on all nodes, the neural model storage method provided in the present embodiments can avoid storing a plurality of copies of the neural model index table, thus avoiding occupying too many storage resources to reduce efficiency of synchronization among the nodes.

The present application can realize multi-node redundant storage of the neural model on the brain-inspired computer, cross-node reading, dynamic selection of the computing nodes that store the neural model, and self-repair after a computing node failure, thus improving reliability of storage of the neural model, convenience of reading of the neural model, and the overall operation efficiency and stability of the operating system of the brain-inspired computer.

The above embodiments are merely used to illustrate the technical solution of the present invention, not to limit it. Although the present invention is described in detail with reference to the above embodiments, those of ordinary skill in the art should understand that it is still possible to modify the technical solutions described in the above embodiments, or replace some or all of the technical features equivalently. These modifications or substitutions do not deviate the essence of the corresponding technical solution from the scope of the technical solution of the embodiment of the present invention.

## Claims

1. A neural model storage system for an operating system of a brain-inspired computer, comprising a master node, a backup master node, and computing nodes, **characterized in that**

   the master node is configured for maintaining resources of an entire brain-inspired computer, which comprise a relationship between a neural model and the computing nodes, and information of the computing nodes, selecting the computing nodes by constructing weights, taking into account the number of idle cores of the computing nodes, the number of failures of the computing nodes, and failure time, and being subject to a constraint of available storage space of the computing nodes;
   the backup master node is configured for redundant backup of the master mode; the computing nodes comprise a set of brain-inspired chips configured for deploying the neural model, and the brain-inspired chips comprise a set of cores as a basic unit of computing resource management, which is configured for keeping the neural model stored in a form of a model file and performing computing tasks; and
   the master node is further configured for maintaining the number of remaining cores of the computing nodes.

2. The neural model storage system for the operating system of the brain-inspired computer of claim 1, wherein the brain-inspired chips comprise a two-dimensional grid structure, and each grid represents one of the cores; based on a two-dimensional distribution of brain-inspired chip resources, the operating system of the brain-inspired computer is configured to take the cores as the basic unit of the resource management and abstract a unified address space from brain-inspired computing hardware resources.

3. A storage method based on the neural model storage system for the operating system of the brain-inspired computer of claim 1, **characterized in that** a storage of the neural model comprises:

   at step 1, the master node selecting the computing nodes to store the neural model, by constructing weights, taking into account the number of idle cores of the computing nodes, the number of failures of the computing nodes, and failure time, and being subject to the constraint of available storage space of the computing nodes;
   at step 2, the master node sending the neural model to the selected computing nodes, maintaining the relationship between the neural model and the computing nodes;
   at step 3, the master node making a backup of the relationship between the neural model and the computing nodes to the backup master node; and
   at step 4, the master node and the selected computing nodes completing deploying the neural model.

4. The storage method based on the neural model storage system for the operating system of claim 3, wherein

at step 1, the more the number of idle cores of the computing nodes, the easier the computing nodes to be selected in preference; the less the number of failures of the computing nodes, the easier the computing nodes to be selected in preference; the greater a time difference between a recent failure time of the computing nodes and a previous failure time of the computing nodes, the easier the computing nodes to be selected in preference; and the master node maintaining remaining storage space of the computing nodes, wherein computing nodes with remaining storage space less than required storage space of the model file are not selected for storing the model file;

at step 2, the master node sending the model file to the computing nodes which are configured to store the model file via a communication protocol, the computing nodes receiving the model file and feeding back to the master node, the master node recording a correspondence between the model file and the computing nodes which are configured to store the model file via feedback, formulating and maintaining a neural model index table;

at step 3, the master node synchronizing the neural model index table to the backup master node; and

at step 4, the master node storing the model file to the computing nodes for model deployment, reading the model file from the computing nodes that store the model file, obtaining specific content of the neural model, and sending the specific content to the brain-inspired chips of the computing nodes to configure the cores of the brain-inspired chips.

5. The storage method based on the neural model storage system for the operating system of claim 3 or claim 4, wherein the step 1 further comprises the following steps:

at step 1.1, searching a first computing node;

at step 1.2, obtaining remaining storage space of the first computing node, when the remaining storage space of the first computing node meets a storage requirement of the model file, obtaining the number of idle cores of the first computing node, the number of failures of the first computing node, and failure time of the first computing node, calculating a weight according to the number of idle cores of the first computing node, the number of failures of the first computing node, and failure time of the first computing node; when the remaining storage space of the first computing node does not meet the storage requirement of the model file, performing step 1.3;

at step 1.3, determining whether a next computing node exists, if yes, searching the next computing node and performing the step 1.2 with the next computing node; if no, sending the model file to a computing node with the greatest weight.

6. The storage method based on the neural model storage system for the operating system of claim 5, wherein the step 1.2 further comprises the master node calculating the weight of any computing node, remaining storage space of which meets the storage requirement, according to the following formula:

$$nodeWeight = K_c \times chipResNum - \sum_{i=1}^{n} \frac{K_s}{t_{now} - t_i}$$

wherein *nodeWeight* represents the weight of the computing node, $K_c$ represents an influence parameter of the number of remaining brain-inspired chip resources, *chipResNum* represents the number of remaining brain-inspired chip resources, *i* represents an ith failure of the computing node, *n* represents the total number of failures of the computing node, $t_{now}$ represents the current time, $t_i$ represents the time of the ith failure of the computing node, $K_s$ represents an influence parameter of the number of failures of the computing node, both $K_c$ and $K_s$ are adjustment parameters, and the computing node with the greatest weight is configured to store the model file.

7. The storage method based on the neural model storage system for the operating system of claim 4, wherein at step 4, reading the neural model comprises:

after deploying the neural model to the computing nodes that store the model file, the computing nodes directly reading the model file thereof for deployment, when the model file is read, checking the model file; when it happens that either or both of the model file being not read and the check failing, sending a message to the master node, searching other computing nodes that store the model file, sending a message to the same ones, and reading the neural model.

8. The storage method based on the neural model storage system for the operating system of claim 3, further comprising recovering from failures of non-master nodes, wherein the neural model storage system comprises a set of hot backup computing nodes, and the recovering from failures of non-master nodes further comprises:

when a computing node fails, activating a new computing node, replacing a coordinate of abstracted resource where an original failed computing node is located, and taking over an operation of the failed computing node, wherein the new computing node is in communication with the master node via a communication protocol; searching a relationship between the neural model and the computing nodes, finding the model file required by the failed computing node, obtaining the model file from the computing nodes that store the model file, storing contents of the neural model in a memory of the new computing node, and sending the neural model to the brain-inspired chips of the new computing node for configuring.

9. The storage method based on the neural model storage system for the operating system of claim 3, further comprises recovering from failures of the master node:
storing the relationship between the neural model and the computing nodes to both the master node and the backup master node, which serve as a backup for each other; when the master node fails, the backup master node becoming a new master node, and taking over an operation of the failed master node; the operating system of the brain-inspired computer electing a new backup master node, and the new master node sending the relationship between the neural model and the computing nodes to the new backup master node.

10. The storage method based on the neural model storage system for the operating system of claim 3, further comprises recovering from a whole machine restart or failure:
storing the relationship between the neural model and the computing nodes actually stored by the present computing node to a storage device, when the brain-inspired computer recovers from a whole machine restart or failure, the computing nodes sending the relationship between the neural model and the computing nodes thereof to the master node, and the master node aggregating relationships to formulate a global relationship between the neural model and the computing nodes.

| Master nodes Master | | | | Backup master nodes Shadow | | |
|---|---|---|---|---|---|---|
| Neural model index table | Information of the computing nodes | | | Neural model index table | Information of the computing nodes | |
| Information of the model file 1 | Information of the computing node S1 | | | Information of the model file 1 | Information of the computing node S1 | |
| Information of the model file 2 | Information of the computing node S2 | | | Information of the model file 2 | Information of the computing node S2 | |
| Information of the model file 3 | Information of the computing node S3 | | | Information of the model file 3 | Information of the computing node S3 | |
| Information of the model file 4 | Information of the computing node S4 | | | Information of the model file 4 | Information of the computing node S4 | |

Synchronizing

| Computing node Slave S1 | Computing node Slave S2 | Computing node Slave S3 | Computing node Slave S4 |
|---|---|---|---|
| Model file stored in a present node | Model file stored in a present node | Model file stored in a present node | Model file stored in a present node |
| Computing tasks in a present node | Computing tasks in a present node | Computing tasks in a present node | Computing tasks in a present node |

FIG. 1

The master node selecting the computing nodes to store the neural model, by constructing weights, taking into account the number of idle cores of the computing nodes, the number of failures of the computing nodes, and failure time in each failure thereof, and being subject to the constraint of available storage space of the computing nodes — S1

The master node sending the neural model to the selected computing nodes, maintaining the relationship between the neural model and the computing nodes — S2

The master node making a backup of the relationship between the neural model and the computing nodes to the backup master node — S3

The master node and the selected computing nodes completing deploying the neural model — S4

FIG. 2

FIG. 3

Storage of all contents of a neural
model

Neural model index table

| Table item 1 |
|---|
| Table item 2 |
| Table item 3 |
| Table item 4 |
| …… |

Model file

Contents of the neural model

Neural model index

Master nodes Master   Backup master nodes Shadow

Computing nodes Slave

FIG. 4

EP 4 495 832 A1

FIG. 5

16

| | |
|---|---|
| **INTERNATIONAL SEARCH REPORT** | International application No.<br>**PCT/CN2023/080669** |

**A. CLASSIFICATION OF SUBJECT MATTER**

G06N 3/063(2023.01)i; G06F11/14(2006.01)i; G06F16/172(2019.01)i; G06F16/13(2019.01)i

According to International Patent Classification (IPC) or to both national classification and IPC

**B. FIELDS SEARCHED**

Minimum documentation searched (classification system followed by classification symbols)

IPC:G06N3/-; G06F11/-; G06F16/-

Documentation searched other than minimum documentation to the extent that such documents are included in the fields searched

Electronic data base consulted during the international search (name of data base and, where practicable, search terms used)

CNABS, CNTXT, USTXT, VEN, CNKI, IEEE: 类脑, 主控节点, 选择, 空间, 空闲, 故障, 计算节点, 工作节点, 存储, 保存, 模型文件, 神经模型, 机器学习模型, 部署, 分配, brain-like, control node, space, fault, store, calculating node, working node, neural model, model file

**C. DOCUMENTS CONSIDERED TO BE RELEVANT**

| Category* | Citation of document, with indication, where appropriate, of the relevant passages | Relevant to claim No. |
|---|---|---|
| PX | CN 114330698 A (ZHEJIANG LAB et al.) 12 April 2022 (2022-04-12)<br>claims 1-10 | 1-10 |
| Y | CN 113791913 A (ZHEJIANG UNIVERSITY et al.) 14 December 2021 (2021-12-14)<br>description, paragraphs 8-30 | 1-10 |
| Y | CN 109086134 A (ZHENGZHOU YUNHAI INFORMATION TECHNOLOGY CO., LTD.)<br>25 December 2018 (2018-12-25)<br>description, paragraphs 4-13 | 1-10 |
| A | CN 110490316 A (TENCENT TECHNOLOGY (SHENZHEN) CO., LTD.) 22 November<br>2019 (2019-11-22)<br>entire document | 1-10 |
| A | CN 113449842 A (HUAWEI TECHNOLOGIES CO., LTD.) 28 September 2021 (2021-09-28)<br>entire document | 1-10 |
| A | CN 108958892 A (ZHENGZHOU YUNHAI INFORMATION TECHNOLOGY CO., LTD.)<br>07 December 2018 (2018-12-07)<br>entire document | 1-10 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be |
| "E" | earlier application or patent but published on or after the international filing date | considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **18 May 2023** | **02 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/080669**

### C.   DOCUMENTS CONSIDERED TO BE RELEVANT

| Category* | Citation of document, with indication, where appropriate, of the relevant passages | Relevant to claim No. |
|---|---|---|
| A | US 2018032869 A1 (FUJITSU LIMITED) 01 February 2018 (2018-02-01)<br>entire document | 1-10 |

Form PCT/ISA/210 (second sheet) (July 2022)

**INTERNATIONAL SEARCH REPORT**
Information on patent family members

International application No.

**PCT/CN2023/080669**

| Patent document cited in search report | | | Publication date (day/month/year) | Patent family member(s) | | | Publication date (day/month/year) |
|---|---|---|---|---|---|---|---|
| CN | 114330698 | A | 12 April 2022 | CN | 114330698 | B | 05 August 2022 |
| CN | 113791913 | A | 14 December 2021 | CN | 113791913 | B | 11 February 2022 |
| CN | 109086134 | A | 25 December 2018 | None | | | |
| CN | 110490316 | A | 22 November 2019 | CN | 110490316 | B | 06 January 2023 |
| CN | 113449842 | A | 28 September 2021 | None | | | |
| CN | 108958892 | A | 07 December 2018 | None | | | |
| US | 2018032869 | A1 | 01 February 2018 | JP | 2018018451 | A | 01 February 2018 |

Form PCT/ISA/210 (patent family annex) (July 2022)

**REFERENCES CITED IN THE DESCRIPTION**

**Patent documents cited in the description**

- CN 202210249465